# EUROPEAN PATENT SPECIFICATION

(11) **EP 3 541 675 B1**
(45) Date of publication and mention of the grant of the patent: **07.01.2026**
(21) Application number: 17870862.4
(22) Date of filing: 15.11.2017
(51) Int. Cl.: B60W 20/16, B60K 6/485, F02D 41/14, H02K 21/22, B60W 20/10, F02D 41/20, F02D 41/06, B60W 50/08, B60W 20/19, B60K 6/48, B60W 50/00

(54) **CONTROL SYSTEM FOR ASSISTING AN INTERNAL COMBUSTION ENGINE**
STEUERUNGSSYSTEM ZUR UNTERSTÜTZUNG EINES VERBRENNUNGSMOTORS
SYSTÈME DE COMMANDE POUR ASSISTER UN MOTEUR À COMBUSTION INTERNE

(30) Priority: 15.11.2016 IN 201641038845
(43) Date of publication of application: 25.09.2019
(73) Proprietor: TVS Motor Company Limited, Chennai 600006 (IN)
(72) Inventor: RAGHUNATH KUMAR RACHABATTUNI, Venkata, Chennai 600006 (IN); JABEZ DHINAGAR, Samraj, Chennai 600006 (IN); VINAY CHANDRAKANT, Harne, Chennai 600006 (IN)
(74) Representative: Patentanwaltskanzlei Matschnig & Forsthuber OG
(86) International application number: PCT/IB2017/057120
(87) International publication number: WO 2018/092027

(56) References cited:
- EP-A1- 1 219 493
- EP-A1- 2 308 732
- EP-A2- 1 897 771
- WO-A1-2012/009811
- WO-A1-2012/009811
- WO-A1-2014/083796
- WO-A2-2006/125019
- WO-A2-2011/033528
- WO-A2-2011/033529
- JP-A- 2008 228 534
- US-A1- 2010 071 971
- US-A1- 2010 071 973

## Description

### TECHNICAL FIELD

The present invention relates to an internal combustion engine of a vehicle and its assisting machine, which is required to operate under various loads at different speeds.

### BACKGROUND

When an internal combustion engine is operated, emissions are a major concern. While some of the emissions occur during starting operation, majority of emissions occur during acceleration and increased load operations. The engine is usually provided with a starter motor which is used for starting the engine from zero speed. The starter motor takes energy from an energy storage medium such as a battery. Additionally, the engine is also equipped with a magneto arrangement which is used for generating power to charge the battery.

In the recent times a single motor, called integrated starter generator (ISG), replaced both these machines which performs starting operations, as well as power generation operations above a threshold speed. EP2308732A1 and EP1219493A1 disclose hybrid propulsion systems of four-wheeled vehicles.

WO2014/147904A1 discloses a hybrid two-wheeled vehicle with a generator-motor that can also start the internal combustion engine.

CN103078578A discloses a hybrid two-wheeled vehicle with a starter-generator that can also support acceleration of the two-wheeled vehicle.

### BRIEF DESCRIPTION OF THE DRAWINGS

The detailed description is described with reference to the accompanying figures. The same numbers are used throughout the drawings to reference like features and components.
Fig. 1 illustrates a left side view of an exemplary two-wheeled vehicle, in accordance with an embodiment of the present subject matter.
Fig. 2 illustrates a typical cross section of an electrical machine in accordance to an embodiment of the present invention.
Fig. 3 depicts a block diagram of a control system for assisting an internal combustion engine of a vehicle during starting and during high speed operations in accordance to an embodiment of the present invention.
Fig. 4 illustrates a power electronic circuitry of the machine controller including a voltage boost circuit in accordance to an embodiment of the present subject matter.
Fig. 5 illustrates a speed profile of the vehicle in accordance to an embodiment of the present subject matter.
Fig. 6 illustrates a flow diagram depicting method for boosting the voltage for the electrical machine in accordance to an embodiment of the present subject matter.

### DETAILED DESCRIPTION

The invention is defined by the control system of independent claim 1 and by the method of independent claim 13. Advantageous embodiments are specified in the dependent claims. The present invention describes a machine which is beyond ISG in terms of functionality. This invention is also designed to provide assistance to the engine under high load conditions at high speed so that vehicle and engine operation can be performed to reduce CO2 and NOx emissions.

Further, the present invention can be realized with the help of multiple machine topologies, such as Induction machine, switched reluctance machine (SRM), and BLDC (brush less direct current) machine. Induction and switched reluctance machines are operated with corresponding power electronic controllers that regulate the torque based on the input conditions such as present speed of rotation.

While induction machine and SRM do not have the speed limited by induced back-emf (electro motive force), BLDC 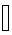 s speed range suffers due to this induced voltage. This is the voltage induced in the winding coils due to the rate of change of flux in the coils caused by presence of rotating magnets. This voltage limits the current flow into the machine, limiting the possible torque at speeds above zero depending on the supplied voltage.

When a machine is designed for starting and power assist operations, requirements are conflicting. Starting requires high torque constant, and power assist requires high speed/power operation and in turn low torque constant.

In the present invention, the electrical machine, for example, the BLDC machine is designed with startability of the engine as the primary target. However, for such designs, the no load speed of the machine is greatly limited by the back-emf.

In an embodiment, the BLDC machine 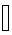 s torque at any speed is proportional to the current flowing through it. At a given speed, the voltage applied across the motor coils is offset by the voltage induced in the coils due to the rotor 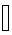 s rotation. The current through the motor is {effective voltage (Vbat-Vinduced)/Line-line resistance}, wherein Vbat is the voltage applied/battery voltage and Vinduced is the voltage induced in the coils. As the speed increases, the current reduces.

In order to provide the engine with supporting torque at its operating speeds, the proposed machine needs to generate required torque, which means that necessary current needs to pass through the machine.

The present invention includes a controller for the electrical machine, which includes a voltage boost circuit or a component of the existing circuit which increases the available battery voltage to a higher voltage.

Under normal conditions, the electrical machine is used for starting the engine at the beginning till the engine starts. This is done by the controller triggering the power electronic switches in sequence so that the required torque for starting the engine is generated. Usually the voltage boost option is not used. Under specific conditions of the engine, where the electrical machine is not able to start the engine with the torque produced, the controller detects it and then activates boost circuit to provide higher voltage to the motor, thereby providing more current and producing more torque. This operation is done in cases when the engine does not start with normal operation, and hence the machine 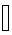 s high current operation is limited to only few seconds of operation.

Once the engine starts, the machine controller operates as a voltage regulator and the electrical machine acts as generator. Voltage induced across the machine terminals is rectified and the generated power is used to charge the battery or run other electrical loads of the vehicle.

When the controller detects that torque needs to be supplied from the electrical machine to the engine, either based on user input or based on engine speed conditions or based on throttle signal input, the controller switches to motoring mode, and activates voltage boost circuit. The voltage is increased to such a level that the current is sufficient to produce the assistance torque for the engine. The machine controller may also interact with the engine controller to pass the information about the power assistance operation so that the engine controller can adjust the engine load to make the engine operate with minimized emissions.

The standard operating voltage for an electrical machine in starting applications could be 12V or the voltage supplied from the batteries on the vehicle. However, the voltage may be boosted to sufficiently high value depending on machine characteristics, during the boost operation, to meet the torque assistance requirements.

The voltage boost range is limited by the operating voltage rating of the components used for building the boost circuit.

In a vehicle environment, one of the inputs for detecting the power assist requirement is a signal from a switch which is activated by the user. Another type of input for detecting the assist requirement is a signal from the engine speed (and torque) monitoring device & circuit and a signal from the throttle signal input. In an embodiment, the electrical machine can be inner rotating or outer rotating.

In one of the embodiment, the proposed electrical machine is used to assist the rotation of crankshaft of the internal combustion engine, with the peak torque at operating current being limited to less than or about 50 N-m both during starting of the vehicle and during providing power assistance to the internal combustion engine during running of the vehicle. This is referred to as a preset threshold value. Further, the peak torque at operating current of the electrical machine of the present invention is less than the operational requirement of a traction motor of a hybrid and/or electric vehicle. Further, in one embodiment, the one or more sensors includes at least one throttle position sensor, a speed sensor, an emissions sensor like a NOx sensor and the input from the at least one throttle position sensor corresponds to the operational torque of the internal combustion engine. Also, the electrical machined provides torques support to the internal combustion engine to reduce any emissions detected by the emissions sensor.

In an embodiment, the present invention provides a control system for assisting an internal combustion engine of a vehicle during and after starting and during high speed operations. The control system of the present invention is capable of achieving reduction in emissions at high speed operations. The control system includes an electrical machine having a stator with plurality of teeth. Each tooth of the plurality of teeth is wound with conducting wire to form a winding. The electrical machine including a rotor having a plurality of permanent magnets that are arranged facing the plurality of teeth of the stator. Further, at least one energy storage device for supplying energy to the electrical machine when the electrical machine is operating as a motor. The energy storage device also enables storing energy generated by the electrical machine when the electrical machine is operating as a generator.

Furthermore, the control system of the present invention is provided with one or more sensors that are capable of sensing at least one of an operational speed and an operational torque of the internal combustion engine. A machine controller is provided, which includes at least one microcontroller. The machine controller further includes a voltage boost circuit. The at least one microcontroller is capable of receiving an output value of the operational torque of the internal combustion engine and an output value of operational speed of the engine from the one or more sensors and comparing the output value of operational torque and the operational speed with a predetermined threshold value of operational torque, and triggering the voltage boost circuit when the output values of the operational torque and the operational speed are higher than the corresponding predetermined threshold values of the operational torque and the operational speed. Further, the voltage boost circuit increases the voltage supplied to the electrical machine for limiting the operational torque of the internal combustion engine below the predetermined threshold value of the operational torque and also to be capable of providing torque assist to the internal combustion engine below a preset value.

In one embodiment, the machine controller includes at least one microcontroller capable of receiving the inputs from the speed measurement device to detect the rotational speed of the IC engine, and the input from the throttle position sensor (TPS). The microcontroller is capable of determining if the speed of rotation of the IC engine is more than a predetermined threshold speed. The microcontroller is also capable of determining if the TPS input is more than a predetermined threshold. The microcontroller further activates the voltage boost circuit when the detected speed of IC engine 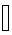 s rotation is more than the predetermined threshold speed, and the detected position from the TPS is more than the predetermined threshold. In an embodiment, the above conditions lead to an increased NOx emission. Further, in an embodiment, when the IC engine is operated at lower speeds, and at low throttle position, for example, during starting operation of the IC engine, the electrical machine is capable of being operated as a starter motor. When the load on the IC engine is nominal, the IC engine is operated at low throttle positions. Further, when the load on the IC engine is higher, the IC engine is operated at high throttle positions and at low speed. In such situations, the number of combustions in the IC engines chamber per unit time is less due to the low speed of the IC engine, and hence the total volume of the NOx emissions is lower. However, when the load on the IC engine is high and when the IC engine is operated at high throttle positions, and at high speed conditions, the total volume of the NOx emissions is high because of the increased frequency of NOx emissions per unit time. The present invention provides a control system that enables reduction of the total volume of NOx emissions when the load on the IC engine is high and when the IC engine is operated at high throttle positions, and at high speed conditions.

In an embodiment, the control system of the present invention further includes a user input switch that is capable of providing input signals to the microcontroller and overriding signals received from the one or more sensors when the user desires additional torque assist. The microcontroller is capable of triggering the voltage boost circuit upon receiving the input signals from the user input switch.

Further, in one embodiment, the voltage boost circuit is triggered when the torque required by the internal combustion engine for starting operation is more than a predetermined value. Furthermore, in another embodiment, the voltage boost circuit is also triggered when the load on the IC engine is high and when the IC engine is operated at high throttle positions, and at high speed conditions, depending upon the inputs received from the engine speed sensor and the TPS.

In one embodiment, the control system further includes an engine controller, which is capable of receiving one or more signals from the machine controller when the voltage boost circuit is triggered by the microcontroller.

Further, the electrical machine of the present invention is a brushless direct current motor having the permanent magnets mounted on a surface of the rotor facing the stator. In an alternative embodiment, the electrical machine is a brushless direct current motor having the permanent magnets embedded inside the rotor.

Furthermore, the brushless direct current motor of the present invention has the rotor disposed inside the stator. In an alternative embodiment, the electrical machine is a brushless direct current motor having the rotor disposed outside the stator. In one embodiment, the winding is formed as at least one of a star configuration and a delta configuration. Further, in an embodiment, the triggering of the voltage boost circuit is indicated by means of any one of a visual means and an audio means integrated to a speedometer cluster of the vehicle. The machine controller of the present invention further includes one or more power electronic switches for controlling phase voltages of the electrical machine.

In an embodiment, the rotor is capable of rotating by interacting with a magnetic field produced by the stator upon receiving electrical energy from at least one energy storage device. Further, the rotor is separated from the stator by an air gap, and the magnetic field is perpendicular to an axis of rotation of the rotor. In an alternative embodiment, the rotor is capable of rotating by interacting with a magnetic field produced by the stator upon receiving electrical energy from at least one energy storage device. The rotor is separated from the stator by an air gap, and the magnetic field is parallel to an axis of rotation of the rotor.

These and other advantages of the present subject matter would be described in greater detail in conjunction with the figures in the following description.

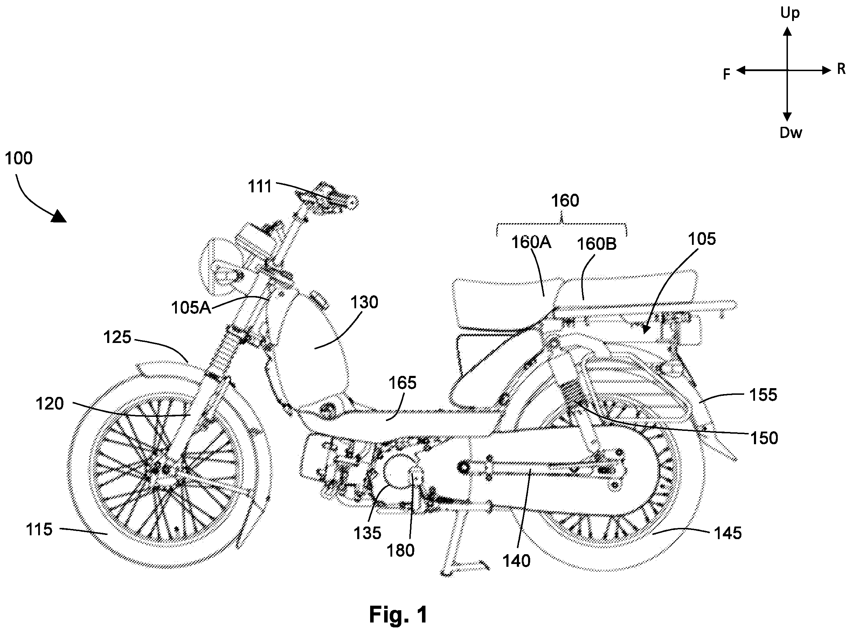

Fig. 1 illustrates a left side view of an exemplary two-wheeled vehicle, in accordance with an embodiment of present subject matter. The vehicle 100 has a frame assembly 105, which acts as the structural member and as skeleton of the vehicle 100. The frame assembly 105 includes a head tube 105A through which a steering assembly is rotatably journaled. The steering assembly includes a handle bar assembly 111 connected to a front wheel 115 through one or more front suspension(s) 120. A front fender 125 covers at least a portion of the front wheel 115. Further, the frame assembly 105 includes a main tube (not shown) extending rearwardly downward from the head tube 105A. A fuel tank 130 is mounted to the main tube 105A. Furthermore, a down tube (not shown) extends substantially horizontally rearward from a rear portion of the main tube. In addition, the frame assembly includes one or more rear tube(s) (not shown) that extends inclinedly rearward from a rear portion of the down tube. In a preferred embodiment, the frame assembly 105 is mono-tube type, which extends from a front portion F to a rear portion R of the vehicle 100.

In one embodiment, a power unit 135 is mounted to the down tube. In an embodiment, the power unit 135 includes an IC engine. The fuel tank 130 is functionally connected to the power unit 135 for supplying fuel. In a preferred embodiment, IC engine is forwardly inclined i.e. a piston axis of the engine is forwardly inclined. Further, the IC engine 135 is functionally coupled to a rear wheel 140. A swing arm 140 is swingably connected to the frame assembly 105 and the rear wheel 145 is rotatably supported by the swing arm 140. One or more rear suspension(s) 150, which are connecting the swing arm 145 at an angle, sustain both the radial and axial forces occurring due to wheel reaction. A rear fender 155 is disposed above the rear wheel 145. A seat assembly 160 is disposed at a rear portion R of the step-through portion defined by the frame assembly 105. In an embodiment, the seat assembly 160 includes a rider seat 160A, and a pillion seat 160B. Further, the pillion seat 160B is positioned above the rear wheel 145. Further, the vehicle 100 is supported by a center stand (not shown) mounted to the frame assembly 105. A floorboard 165 is mounted to the down tube and is disposed at the step-through portion. The floorboard 165 covers at least a portion of the power unit 135. The vehicle 100 is employed with an auxiliary power unit (not shown) supported by the frame assembly 105, for example, an energy storage device such as battery. Additionally, the vehicle 100 is provided with at least one set of foot rest(s) 180 for the rider/pillion to rest their feet.

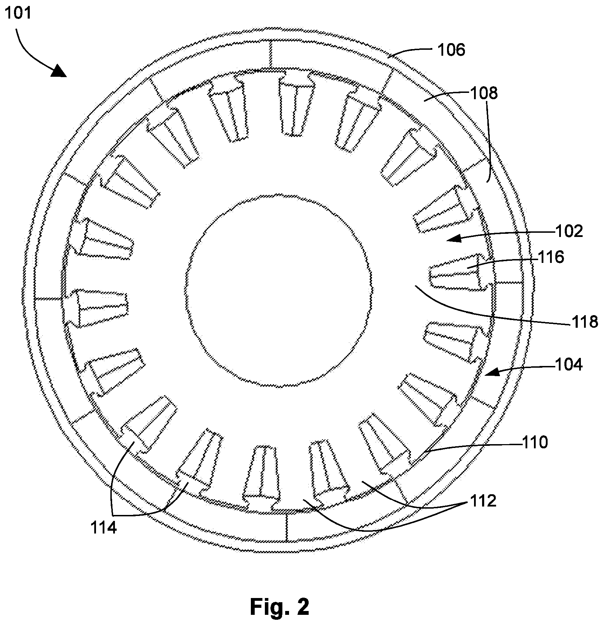

Fig.2 illustrates a cross-section of an electrical machine with respect to an embodiment of the present invention. The electrical machine 101 is either mounted to a crankshaft of the IC engine 135 or is mounted independence to of the IC engine 135 is functionally coupled to the crankshaft of the IC engine 135. In an embodiment, the electrical machine 101 is an outer rotating BLDC machine. In an embodiment, the outer rotating BLDC machine acts as an integrated starter generator (ISG). The electrical machine 101 of the present subject matter includes a rotor 104, which further includes a back iron 106 and a plurality of magnets 108 that are disposed on the inner surface of the rotor 104. In an embodiment, the back iron 106 rotates along with the rotation of the rotor 104. In an embodiment, the plurality of magnets 108 is permanent magnet.

Further, the back iron 106 can be made out of any one of iron, silicon steel, which is either made as one full block of iron or silicon steel. Alternatively, the back iron 106 is made as layers of iron or silicon steel with plurality of electrical insulation layers in between. In an embodiment, the plurality of magnets 108 can be any one of arc type magnets and flat magnets. Further, in one embodiment, the plurality of magnets 108 is disposed adjacently to each other circumferentially, without any gap. Alternatively, the plurality of magnets 108 can be disposed adjacently to each other circumferentially with circumferential air gap between two adjacent magnets of the plurality of magnets 108.

Further, the electrical machine 101 includes a stator 102 having a centrally provided stator core 118 around which a plurality of stator teeth 112 are circumferentially disposed forming a plurality of stator slots 114 therebetween. In an embodiment, the plurality of stator slots 114 is further filled with plurality of winding 116. In an embodiment, the stator 102 is enclosed within the rotor 104 and radially separated by an air gap 110. In an embodiment, each tooth of the plurality of stator teeth 112 includes a stem portion. In one embodiment, the stem portion of the tooth of the plurality of stator teeth 112 is provided with equal width on both ends of the stem portion, i.e., at a first end that is towards the stator core 118 and a second end that is away from the stator core 118. In an alternative embodiment, each slot of the plurality of stator slots 114 is formed to have equal width at both ends, i.e., at an end that is closer to the stator core 118 and at an end that is away from the stator core 118, which is achieved by two adjoining tooth of the plurality of stator teeth 112 having different widths at both its ends are provided to provide uniform or equal gap between them forming that forms the slots. In another alternative embodiment, each of the tooth of the plurality of stator teeth 112 and the each of the slot of the plurality of stator slots 114 are formed in such a manner that the width of the tooth and the slot at both the ends are not equal. In one embodiment, the stem portion of the each of the tooth of the plurality of stator teeth 112 ends with a head portion facing the rotor 104, and has a width that is wider than the stem portion.

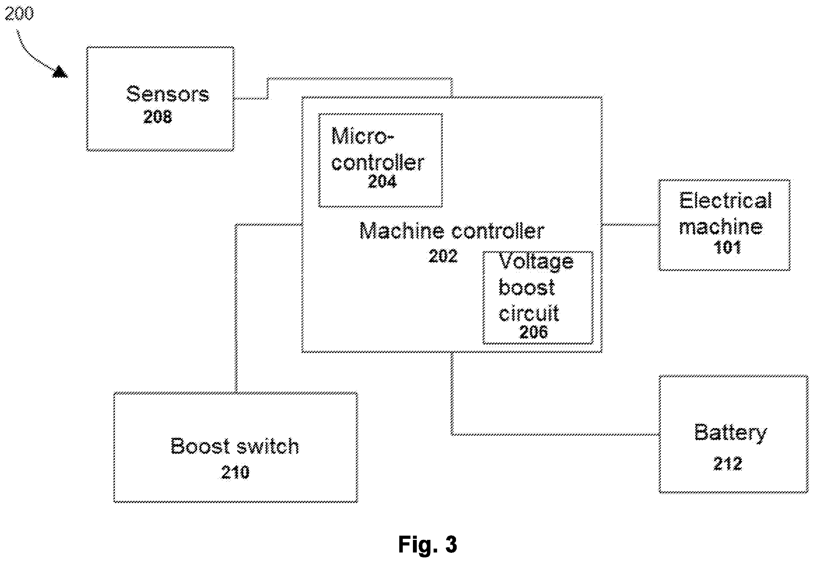

Fig.3 illustrates a block diagram of a control system for assisting an internal combustion engine of a vehicle during starting and during high speed operations. In an embodiment, the control system 200 includes a machine controller 202, which further includes at least one microcontroller 204, and a voltage boost circuit 206. The machine controller 202 that is powered by an energy storage device, for example, a battery 212 and is capable of receiving inputs from one or more sensors 208 and/or a user input from a boost switch 210. Based on the inputs received from the one or more sensors 208 and/or the user input from the boost switch 210, the machine controller 202 controls the electrical machine 101 to operate effectively both during the starting of the vehicle by providing a boost voltage to the electrical machine 101, and during running operation of the vehicle by providing a voltage from the battery 212.

In an embodiment, the microcontroller 204 is capable of processing the signals received from the one or more sensors 208 and/or the user input from the boost switch 210 thereby controlling the voltage boost circuit 206 for effective starting operation of the vehicle.

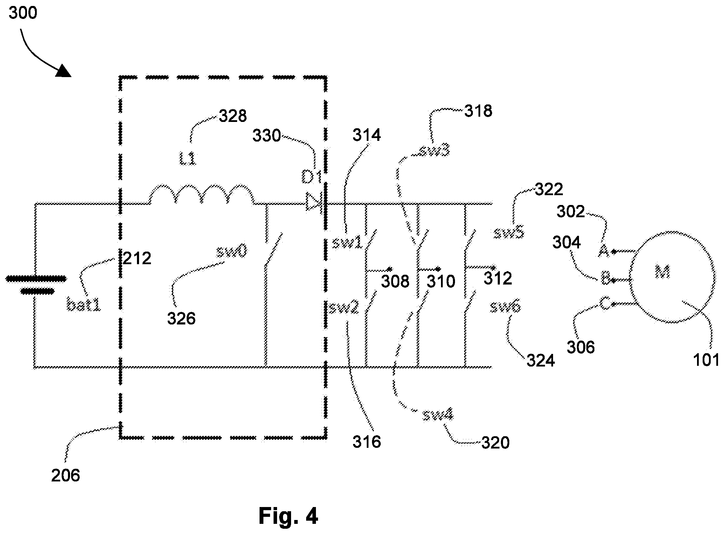

Fig. 4 illustrates a power electronic circuitry 300 of the machine controller 202 including the voltage boost circuit 206 with respect to an embodiment of the present invention. In an embodiment, the power electronic circuitry 300 includes the voltage boost circuit 206, which further includes an inductor 328, a diode 330, and a switch 326 arranged such that the one end of the inductor 328 receives power from the battery 212, while the other end of the inductor 328 is connected to the junction point of the diode 330 and the switch 326. Further, the diode 330 is arranged to allow the current away from the junction point of the diode 330 and the switch 326. In an embodiment, one end of the switch 326 is connected to the junction point of the diode 330 and the switch 326, while its other end is connected to the negative terminal of the battery 212. In an embodiment, the microcontroller 204 controls the switch 326 to be turned ON or OFF at a predetermined duty ratio calculated based upon the voltage boost that is to be achieved by the voltage boost circuit 206. In an embodiment, when the voltage boost circuit 206 is not operational, i.e., the machine controller 202 do not receive any input signals from the sensors 208 and/or the user input through the boost switch 210, the switch 326 is kept at an OFF state, and is turned to ON state only when the machine controller 202 receives input signals from any one of the sensors 208 and the user input from the boost switch 210.

In an embodiment, the one or more sensors 208 are capable of detecting an operational speed and/or operational torque of the internal combustion engine of the vehicle. In an embodiment, the one or more sensors 208 can be Hall Effect sensors, which are capable of indicating the position of the crankshaft of the internal combustion engine 135, which in turn can be used as an input by the microcontroller 204 for calculating the operational speed of the internal combustion engine. In an embodiment, the boost switch 210 is a switch of push button type or toggle button type, which can be operated by the user whenever the user requires the voltage boost circuit 206 of the machine controller 202 to boost the voltage supplied to the electrical machine 101. Therefore, the boost switch 210 is also referred to as user input switch 210 that can be operated by the user. In an embodiment, when the boost switch 210 is operated by the user, the microcontroller 204 overrides the inputs from the one or more sensors 208 and begins to operate the switch 326 at a duty ratio that is required to achieve the necessary boost voltage at the output of the voltage boost circuit 206.

In an embodiment, the power electronic circuitry 300 of the machine controller 202 further includes a first top switch 314 and a first bottom switch 316 arranged in series forming a first junction portion 308 therebetween. The first top switch 314 is connected to the diode 330 of the voltage boost circuit 206. The first bottom switch 316 is connected to the negative terminal of the battery 212. Similarly, the power electronic circuitry 300 of the machine controller 202 also includes a second and third top switches 318, 322 arranged in series to second and third bottom switches 320, 324 respectively, forming second and third junction portions 310, 312 at their corresponding intersections. The first top and bottom switches 314, 316 is arranged in parallel to the second top and bottom switches 318, 320, and the third top and bottom switches 322, 324. The first, second, and the third junction portions 308, 310, 312 are further connected to phase ends of the electrical machine 101, for example, phase ends A, B, C 302, 304, 306 of the electrical machine 101 such that the electrical connection between the machine controller 202 and the electrical machine 101 is established.

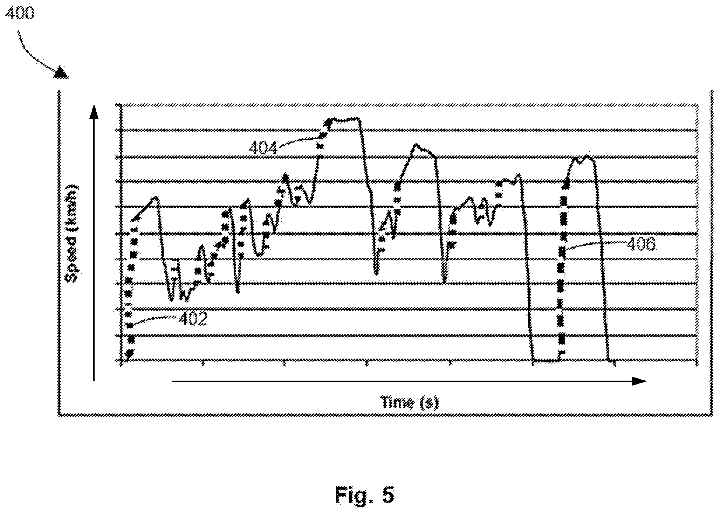

In an embodiment, Fig. 5 depicts a speed profile 400 of the vehicle in accordance to an embodiment of the present subject matter. The speed profile 400 is plotted for varying speeds (km/h) of the vehicle over a time period (seconds). In an embodiment, the curve 402 of the speed profile 400 depicts the starting profile of the vehicle. For example, the curve 402 is achieved when the vehicle is started by rotation of the electrical machine 101 sufficient enough to cause the starting of the internal combustion engine of the vehicle. In an embodiment, upon starting of the engine 135, which is depicted by the beginning portion of the curve 402, i.e., till the vehicle attains any speed that is more than 0 km/h, the vehicle can further accelerate by the operation of the engine 135. The further acceleration of the vehicle after starting of the engine 135 is depicted by the later portion of the curve 402. In an embodiment, while the vehicle is accelerating, the engine 135 tends to work with high loads, which in turn leads to increase in emission level of the engine 135. In an embodiment, the voltage boost circuit 206 of the present invention is operated during the later portion of the curve 402 enabling the electrical machine 101 to assist the engine by sharing a substantial portion of the engine 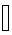 s overall load requirement, such that the engine 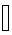 s operating point on a speed-torque characteristic curve is at a location where the emissions are reduced and do not increase beyond an optimal emission level.

Further, in an embodiment, the curve 404 of the speed profile 400 depicts a condition in which the engine is operating at a high speed and the corresponding load requirement is also high whenever the vehicle is required to accelerate at such high speeds. Such a condition may also lead to increased emission levels. In an embodiment, the curve 404 of the speed profile 400 represents the region where the voltage boost circuit 206 is operated in order to provide power assist by the electrical machine 101 to the engine, thereby reducing the emission levels of the engine at such high speed and high load conditions.

Further, in an embodiment, the curve 406 of the speed profile 400 represents a condition in which the engine is already started and idling, hence at a low speed, for example, 0 km/h. In such a condition, when the vehicle is expected to accelerate to high speed, the engine is expected to deliver high loads, which could also cause in increased emission levels. In an embodiment, the curve 406 of the speed profile 400 represents the region where the voltage boost circuit 206 is operated in order to provide power assist by the electrical machine 101 to the engine, thereby reducing the emission levels of the engine to optimal conditions, at such high load conditions.

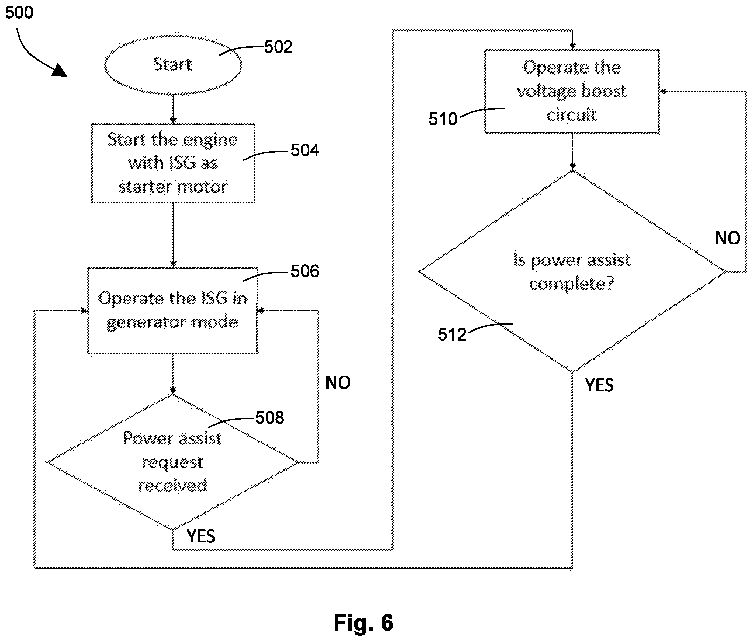

Fig.6 depicts a method 500 for boosting the voltage for the electrical machine 101 in accordance to an embodiment of the present subject matter. In an embodiment, at step 504, the engine is started with the help of the electrical machine 101, which acts as a starter motor enabling the engine to start. Further, at step 506, the electrical machine 101 is operated as a generator, for example, when the engine is operating in a low load condition. Further, at step 508, the machine controller 202 receives inputs from one or more sensors 208 and/or the user input from the boost switch 210. The microcontroller 204 of the machine controller 202 determines whether the voltage boost circuit 206 of the machine controller 202 is required to provide power assist to the engine or not. For example, the microcontroller 204 determines the operation of the voltage boost circuit 206 when the input from the one or more sensors 208 indicates that there is a high load condition on the engine, which requires a high torque to be produced by the engine. The microcontroller 204 also determines the operation of the voltage boost circuit 206 when the input from the one or more sensors 208 detects a high emission level. Further, the microcontroller 204 also determines the operation of the voltage boost circuit 206 based only upon the user input received from the boost switch 210 by overriding the inputs from the one or more sensors 208. At step 508, if the machine controller 202 does not determine the need for operating the voltage boost circuit 206, it continues to check the need for operating the voltage boost circuit 206.

In an embodiment, if it is determined that the engine requires power assist, then, at step 510, the microcontroller 204 enables the operation of the voltage boost circuit 206. Further, at step 512, the microcontroller 204 determines whether the power assist operation provided by the voltage boost circuit 206 is no longer required for the engine, i.e., the engine continues to operate a low load condition and/or low emission operating levels. On determining the same, the microcontroller 204 does not operate the voltage boost circuit 206 and the electrical machine 101 returns to operate as generator, as in step 506. Further, the voltage boost circuit 206 increases the voltage supplied to the electrical machine 101 limiting the operational torque of the internal combustion engine 135 below a preset threshold value of the operational torque.

It is to be understood that the aspects of the embodiments are not necessarily limited to the features described herein. The scope of protection is defined by the appended claims.

## Claims

1. A control system (200) for assisting an internal combustion engine (135) of a two-wheeled vehicle (100) during and after starting and during high-speed operations thereof, said control system (200) capable of achieving reduction in emissions at high-speed operations and high throttle positions, said control system (200) comprising:
an electrical machine (101) including a stator (102) having a plurality of teeth (112), each tooth of said plurality of teeth (112) being wound with conducting wire to form a winding (116), said electrical machine (101) including a rotor (104) having a plurality of permanent magnets (108) that are facing said plurality of teeth (112) of said stator (102);
at least one energy storage device (212) for supplying energy to said electrical machine (101) when said electrical machine (101) being operating as a motor, and for storing energy generated by said electrical machine (101) when said electrical machine (101) being operating as a generator;
one or more sensors (208) capable of sensing at least one of an operational speed of said internal combustion engine (135), an operational torque of said internal combustion engine (135), and a throttle position input for said internal combustion engine (135); and
a machine controller (202) including at least one voltage boost circuit (206), said machine controller (202) capable of receiving at least one of an output value of said operational torque of said internal combustion engine (135) and an output value of said operational speed of said internal combustion engine (135) from said one or more sensors (208) and comparing said output value of said operational torque and output value of said operational speed with a corresponding predetermined threshold value of said operational torque and predetermined threshold value of said operational speed, and triggering said voltage boost circuit (206) when at least one of said output value of said operational torque and output value of said operational speed being higher than said corresponding predetermined threshold value of said operational torque and predetermined threshold value of said operational speed, and wherein said voltage boost circuit (206) increases a voltage supplied to said electrical machine (101), supplying of said voltage to said electrical machine (101) through said voltage boost circuit (206) ensures that an operational torque requirement from said internal combustion engine (135) being below a predetermined threshold value of operational torque of said internal combustion engine (135),
wherein
said electrical machine (101) being capable of achieving a peak torque, at operating current, being limited to about a preset threshold value of operational torque during starting of said internal combustion engine (135) of said vehicle (100) and during providing power assistance to said internal combustion engine (135) during running of said vehicle (100) by said control system (200), and wherein
said control system (200) comprising a user input switch (210), said user input switch (210) being capable of providing input signals to said control system (200), and
said machine controller (202) of said control system (200) comprising at least one microcontroller (204), said at least one microcontroller (204) being configured to trigger said voltage boost circuit (206) upon receiving said input signals from said user input switch (210) by overriding signals received from said one or more sensors (208).

2. The control system (200) as claimed in claim 1, wherein said voltage boost circuit (206) being triggered when said torque required by said internal combustion engine (135) for starting operation being more than a predetermined value.

3. The control system (200) as claimed in claim 1 or 2, wherein said control system (200) comprising an engine controller, which being capable of receiving one or more signals from said machine controller (202) when said voltage boost circuit (206) being triggered by said microcontroller (204).

4. The control system (200) as claimed in claim 1, wherein said electrical machine (101) being a brushless direct current motor having said permanent magnets (108) either mounted on a surface of said rotor (104) facing said stator (102) or embedded inside said rotor (104).

5. The control system (200) as claimed in claim 1, wherein said electrical machine (101) being a brushless direct current motor having said rotor (104) disposed inside said stator (102).

6. The control system (200) as claimed in claim 1, wherein said electrical machine (101) being a brushless direct current motor having said rotor (104) disposed outside said stator (102).

7. The control system (200) as claimed in claim 1, wherein said winding (116) being formed as at least one of a star configuration and a delta configuration.

8. The control system (200) as claimed in claim 1, wherein voltage boost circuit in a triggered state being indicated by means of any one of a visual means and an audio means integrated to a display cluster of said vehicle (100).

9. The control system (200) as claimed in claim 1, wherein said machine controller (202) includes one or more power electronic switches for controlling phase voltages of said electrical machine (101).

10. The control system (200) as claimed in claim 1, wherein said rotor (104) being capable of rotating by interacting with a magnetic field produced by said stator (102) upon receiving electrical energy from said at least one energy storage device (212), said rotor (104) separated from said stator (102) by an air gap (110), and wherein said magnetic field being either parallel or perpendicular to an axis of rotation of said rotor (104).

11. The control system (200) as claimed in claim 1, wherein said preset threshold value of operational torque both during starting of the said internal combustion engine (135) of said vehicle (100) and during providing power assistance to the said internal combustion engine (135) during running of the vehicle (100) is 50 N-m.

12. The control system (200) as claimed in claim 1, wherein said one or more sensors (208) includes at least one throttle position sensor, a speed sensor, or an emissions sensor including a NOx sensor and wherein input from said at least one throttle position sensor corresponds to said operational torque of said internal combustion engine (135) and input from said emission sensor corresponds to need for a torque assist to said internal combustion engine (135).

13. A method of assisting an internal combustion engine (135) of a two-wheeled vehicle (100) during and after starting and during high-speed operations thereof, said method enables achieving reduction in emissions at high-speed operations and high throttle positions, said method comprising steps of:
receiving at least one of an output value of an operational torque of said internal combustion engine (135) and an output value of an operational speed of said internal combustion engine (135) from said one or more sensors (208) by a machine controller (202);
comparing said output value of said operational torque and said output value of said operational speed with a corresponding predetermined threshold value of said operational torque and predetermined threshold value of said operational speed by said machine controller (202); and
triggering a voltage boost circuit (206) of said machine controller (202) when at least one of said output value of said operational torque and output value of said operational speed being higher than said corresponding predetermined threshold value of said operational torque and predetermined threshold value of said operational speed for increasing voltage supplied to said electrical machine (101) by said voltage boost circuit (206), supplying of said voltage to said electrical machine (101) by said voltage boost circuit (206) ensures that an operational torque requirement of said internal combustion engine being (135) below said predetermined threshold value of said operational torque,
achieving a peak torque, at operating current, being limited to about a preset threshold value of 50 N-m during starting of said internal combustion engine (135) of said vehicle (100) by said control system (200),
achieving a peak torque, at operating current, being limited to about a preset threshold value of 50 N-M during providing power assistance to said internal combustion engine (135) during running of said vehicle (100) by said control system (200),
providing a user input switch (210), said user input switch (210) being capable of providing input signals to a control system (200), wherein said control system (200) comprising at least one microcontroller (204), and
configuring said at least one microcontroller (204) to trigger said voltage boost circuit (206) upon receiving said input signals from said user input switch (210) by overriding signals received from said one or more sensors (208).

## Patentansprüche

1. Steuersystem (200) zur Unterstützung eines Verbrennungsmotors (135) eines zweirädrigen Fahrzeugs (100) während und nach dem Start sowie während des Hochgeschwindigkeitsbetriebs desselben, wobei das Steuersystem (200) in der Lage ist, eine Verringerung der Emissionen bei Hochgeschwindigkeitsbetrieb und hohen Drosselklappenstellungen zu erreichen, wobei das Steuersystem (200) umfasst:
eine elektrische Maschine (101) mit einem Stator (102) mit einer Vielzahl von Zähnen (112), wobei jeder Zahn der mehreren Zähne (112) mit einem leitenden Draht umwickelt ist, um eine Wicklung (116) zu bilden, wobei die elektrische Maschine (101) einen Rotor (104) mit mehreren Permanentmagneten (108) umfasst, die den mehreren Zähnen (112) des Stators (102) gegenüberliegen;
mindestens eine Energiespeichervorrichtung (212) zum Zuführen von Energie zu der elektrischen Maschine (101), wenn die elektrische Maschine (101) als Motor arbeitet, und zum Speichern von Energie, die von der elektrischen Maschine (101) erzeugt wird, wenn die elektrische Maschine (101) als Generator arbeitet;
einen oder mehrere Sensoren (208), die mindestens eine der folgenden Größen erfassen können: die Betriebsdrehzahl des Verbrennungsmotors (135), das Betriebsdrehmoment des Verbrennungsmotors (135) und eine Drosselklappenstellungseingabe für den Verbrennungsmotor (135); und
und
eine Maschinensteuerung (202) mit mindestens einer Spannungsverstärkungsschaltung (206), wobei die Maschinensteuerung (202), die in der Lage ist, mindestens einen der Werte, nämlich den Ausgangswert des Betriebsdrehmoments des Verbrennungsmotors (135) und den Ausgangswert der Betriebsdrehzahl des Verbrennungsmotors (135), von dem einen oder den mehreren Sensoren (208) zu empfangen und den Ausgangswert des Betriebsdrehmoments und den Ausgangswert der Betriebsdrehzahl mit einem entsprechenden vorbestimmten Schwellenwert des Betriebsdrehmoments und einem vorbestimmten Schwellenwert der Betriebsdrehzahl zu vergleichen, und die Spannungserhöhungsschaltung (206) auslöst, wenn mindestens einer der Ausgangswerte des Betriebsdrehmoments und der Ausgangswerte der Betriebsdrehzahl höher ist als der entsprechende vorbestimmte Schwellenwert des Betriebsdrehmoments und der vorbestimmte Schwellenwert der Betriebsdrehzahl, und wobei die Spannungserhöhungsschaltung (206) eine an die elektrische Maschine (101) gelieferte Spannung erhöht, wobei die Zufuhr der Spannung zu der elektrischen Maschine (101) über die Spannungserhöhungsschaltung (206) sicherstellt, dass ein Betriebsdrehmomentbedarf des Verbrennungsmotors (135) unter einem vorbestimmten Schwellenwert des Betriebsdrehmoments des Verbrennungsmotors (135) liegt,
wobei
die elektrische Maschine (101) in der Lage ist, ein Spitzendrehmoment bei Betriebsstrom zu erreichen, das auf einen voreingestellten Schwellenwert des Betriebsdrehmoments während des Startens des Verbrennungsmotors (135) des Fahrzeugs (100) und während der Bereitstellung einer Kraftunterstützung für den Verbrennungsmotor (135) während des Betriebs des Fahrzeugs (100) durch das Steuersystem (200) begrenzt ist, und wobei
das Steuersystem (200) einen Benutzereingabeschalter (210) umfasst, wobei der Benutzereingabeschalter (210) in der Lage ist, Eingangssignale an das Steuersystem (200) zu liefern, und
die Maschinensteuerung (202) des Steuersystems (200) mindestens einen Mikrocontroller (204) umfasst, wobei der mindestens eine Mikrocontroller (204) so konfiguriert ist, dass er die Spannungsanhebungsschaltung (206) beim Empfang der Eingangssignale vom Benutzereingabeschalter (210) durch Überschreiben der von dem einen oder den mehreren Sensoren (208) empfangenen Signale auslöst.

2. Steuersystem (200) nach Anspruch 1, wobei die Spannungserhöhungsschaltung (206) ausgelöst wird, wenn das vom Verbrennungsmotor (135) zum Starten des Betriebs erforderliche Drehmoment einen vorbestimmten Wert überschreitet.

3. Steuersystem (200) nach Anspruch 1 oder 2, wobei das Steuersystem (200) eine Motorsteuerung umfasst, die in der Lage ist, ein oder mehrere Signale von der Maschinensteuerung (202) zu empfangen, wenn die Spannungserhöhungsschaltung (206) durch den Mikrocontroller (204) ausgelöst wird.

4. Steuersystem (200) nach Anspruch 1, wobei die elektrische Maschine (101) ein bürstenloser Gleichstrommotor ist, dessen Permanentmagnete (108) entweder auf einer dem Stator (102) zugewandten Oberfläche des Rotors (104) angebracht oder in den Rotor (104) eingebettet sind.

5. Steuersystem (200) gemäß Anspruch 1, wobei die elektrische Maschine (101) ein bürstenloser Gleichstrommotor ist, bei dem der Rotor (104) innerhalb des Stators (102) angeordnet ist.

6. Steuersystem (200) nach Anspruch 1, wobei die elektrische Maschine (101) ein bürstenloser Gleichstrommotor ist, bei dem der Rotor (104) außerhalb des Stators (102) angeordnet ist.

7. Steuersystem (200) nach Anspruch 1, wobei die Wicklung (116) als mindestens eine Sternkonfiguration und/oder Dreieckskonfiguration ausgebildet ist.

8. Steuersystem (200) nach Anspruch 1, wobei eine Spannungserhöhungsschaltung in einem getriggerten Zustand durch ein visuelles Mittel oder ein akustisches Mittel angezeigt wird, die in ein Display-Cluster des Fahrzeugs (100) integriert sind.

9. Steuersystem (200) nach Anspruch 1, wobei die Maschinensteuerung (202) einen oder mehrere Leistungselektronikschalter zum Steuern der Phasenspannungen der elektrischen Maschine (101) umfasst.

10. Steuersystem (200) nach Anspruch 1, wobei der Rotor (104) in der Lage ist, sich durch Wechselwirkung mit einem von dem Stator (102) erzeugten Magnetfeld zu drehen, wenn er elektrische Energie von der mindestens einen Energiespeichervorrichtung (212) empfängt, wobei der Rotor (104) von dem Stator (102) durch einen Luftspalt (110) getrennt ist und wobei das Magnetfeld entweder parallel oder senkrecht zu einer Drehachse des Rotors (104) ist.

11. Steuersystem (200) nach Anspruch 1, wobei der voreingestellte Schwellenwert des Betriebsdrehmoments sowohl während des Startens des Verbrennungsmotors (135) des Fahrzeugs (100) als auch während der Kraftunterstützung des Verbrennungsmotors (135) während des Betriebs des Fahrzeugs (100) 50 Nm beträgt.

12. Steuersystem (200) nach Anspruch 1, wobei der eine oder die mehreren Sensoren (208) mindestens einen Drosselklappensensor, einen Drehzahlsensor oder einen Emissionssensor einschließlich eines NOx-Sensors umfassen und wobei die Eingabe von dem mindestens einen Drosselklappensensor dem Betriebsdrehmoment des Verbrennungsmotors (135) entspricht und die Eingabe von dem Emissionssensor dem Bedarf an einer Drehmomentunterstützung für den Verbrennungsmotor (135).

13. Verfahren zum Unterstützen eines Verbrennungsmotors (135) eines zweirädrigen Fahrzeugs (100) während und nach dem Starten und während des Hochgeschwindigkeitsbetriebs desselben, wobei das Verfahren eine Verringerung der Emissionen bei Hochgeschwindigkeitsbetrieb und hohen Drosselklappenstellungen ermöglicht, wobei das Verfahren die folgenden Schritte umfasst:
Empfangen mindestens eines von einem Ausgangswert eines Betriebsdrehmoments des Verbrennungsmotors (135) und einem Ausgangswert einer Betriebsdrehzahl des Verbrennungsmotors (135) von dem einen oder den mehreren Sensoren (208) durch eine Maschinensteuerung (202);
Vergleichen des Ausgangswerts des Betriebsdrehmoments und des Ausgangswerts der Betriebsdrehzahl mit einem entsprechenden vorbestimmten Schwellenwert des Betriebsdrehmoments und einem vorbestimmten Schwellenwert der Betriebsdrehzahl durch die Maschinensteuerung (202); und
Auslösen einer Spannungserhöhungsschaltung (206) der Maschinensteuerung (202), wenn mindestens einer der Ausgangswerte des Betriebsdrehmoments und der Ausgangswerte der Betriebsdrehzahl höher ist als der entsprechende vorbestimmte Schwellenwert des Betriebsdrehmoments und der vorbestimmte Schwellenwert der Betriebsdrehzahl, um die von der Spannungserhöhungsschaltung (206) an die elektrische Maschine (101) gelieferte Spannung zu erhöhen, die Zufuhr der Spannung zu der elektrischen Maschine (101) durch die Spannungserhöhungsschaltung (206) sicherstellt, dass ein Betriebsdrehmomentbedarf des Verbrennungsmotors (135) unter dem vorbestimmten Schwellenwert des Betriebsdrehmoments liegt,
ein Spitzendrehmoment bei Betriebsstrom erreicht wird, das während des Startens des Verbrennungsmotors (135) des Fahrzeugs auf einen voreingestellten Schwellenwert von etwa 50 N-m begrenzt ist (100) durch das Steuersystem (200)
Erreichen eines Spitzenmoments bei Betriebsstrom, das auf einen voreingestellten Schwellenwert von etwa 50 Nm begrenzt ist, während die Unterstützung der Verbrennungskraftmaschine (135) während des Betriebs des Fahrzeugs (100) durch das Steuersystem (200) erfolgt
Bereitstellen eines Benutzereingabeschalters (210), wobei der Benutzereingabeschalter (210) in der Lage ist, Eingangssignale an ein Steuersystem (200) zu liefern, wobei das Steuersystem (200) mindestens einen Mikrocontroller (204) umfasst, und
Konfigurieren des mindestens einen Mikrocontrollers (204) zum Auslösen der Spannungserhöhungsschaltung (206) beim Empfang der Eingangssignale vom Benutzereingabeschalter (210) durch Überschreiben der von dem einen oder den mehreren Sensoren (208) empfangenen Signale.

## Revendications

1. Système de commande (200) destiné à assister un moteur à combustion interne (135) d'un véhicule à deux roues (100) pendant et après le démarrage et pendant son fonctionnement à grande vitesse, ledit système de commande (200) étant capable de réduire les émissions lors du fonctionnement à grande vitesse et à des positions d'accélération élevées, ledit système de commande (200) comprenant :
une machine électrique (101) comprenant un stator (102) comportant une pluralité de dents (112), chaque dent de ladite pluralité de dents (112) étant enroulée avec un fil conducteur pour former un enroulement (116), ladite machine électrique (101) comprenant un rotor (104) comportant une pluralité d'aimants permanents (108) qui font face à ladite pluralité de dents (112) dudit stator (102) ;
au moins un dispositif de stockage d'énergie (212) pour fournir de l'énergie à ladite machine électrique (101) lorsque ladite machine électrique (101) fonctionne comme un moteur, et pour stocker l'énergie générée par ladite machine électrique (101) lorsque ladite machine électrique (101) fonctionne comme un générateur ;
un ou plusieurs capteurs (208) capables de détecter au moins l'un parmi une vitesse de fonctionnement dudit moteur à combustion interne (135), un couple de fonctionnement dudit moteur à combustion interne (135) et une entrée de position de papillon pour ledit moteur à combustion interne (135) ; et
et
un contrôleur de machine (202) comprenant au moins un circuit élévateur de tension (206), ledit contrôleur de machine (202) capable de recevoir au moins une valeur de sortie dudit couple de fonctionnement dudit moteur à combustion interne (135) et une valeur de sortie de ladite vitesse de fonctionnement dudit moteur à combustion interne (135) provenant dudit ou desdits capteurs (208) et de comparer ladite valeur de sortie dudit couple de fonctionnement et ladite valeur de sortie de ladite vitesse de fonctionnement à une valeur seuil prédéterminée correspondante dudit couple de fonctionnement et à une valeur seuil prédéterminée de ladite vitesse de fonctionnement, et déclencher ledit circuit d'augmentation de tension (206) lorsque au moins l'une de ladite valeur de sortie dudit couple de fonctionnement et de ladite valeur de sortie de ladite vitesse de fonctionnement est supérieure à ladite valeur seuil prédéterminée correspondante dudit couple de fonctionnement et à ladite valeur seuil prédéterminée de ladite vitesse de fonctionnement, et dans lequel ledit circuit d'augmentation de tension (206) augmente une tension fournie à ladite machine électrique (101), l'alimentation de ladite machine électrique (101) en tension par l'intermédiaire dudit circuit élévateur de tension (206) garantit que la demande de couple de fonctionnement dudit moteur à combustion interne (135) est inférieure à une valeur seuil prédéterminée du couple de fonctionnement dudit moteur à combustion interne (135),
dans lequel
ladite machine électrique (101) est capable d'atteindre un couple maximal, à courant de fonctionnement, limité à environ une valeur seuil prédéfinie de couple de fonctionnement pendant le démarrage dudit moteur à combustion interne (135) dudit véhicule (100) et pendant la fourniture d'une assistance motrice audit moteur à combustion interne (135) pendant le fonctionnement dudit véhicule (100) par ledit système de commande (200), et dans lequel
ledit système de commande (200) comprenant un commutateur d'entrée utilisateur (210), ledit commutateur d'entrée utilisateur (210) étant capable de fournir des signaux d'entrée audit système de commande (200), et
ledit contrôleur de machine (202) dudit système de commande (200) comprenant au moins un microcontrôleur (204), ledit au moins un microcontrôleur (204) étant configuré pour déclencher ledit circuit d'augmentation de tension (206) lors de la réception desdits signaux d'entrée provenant dudit commutateur d'entrée utilisateur (210) en neutralisant les signaux reçus provenant dudit ou desdits capteurs (208).

2. Système de commande (200) selon la revendication 1, dans lequel ledit circuit élévateur de tension (206) est déclenché lorsque ledit couple requis par ledit moteur à combustion interne (135) pour démarrer le fonctionnement est supérieur à une valeur prédéterminée.

3. Système de commande (200) selon la revendication 1 ou 2, dans lequel ledit système de commande (200) comprend un contrôleur de moteur, qui est capable de recevoir un ou plusieurs signaux provenant dudit contrôleur de machine (202) lorsque ledit circuit d'augmentation de tension (206) est déclenché par ledit microcontrôleur (204).

4. Système de commande (200) selon la revendication 1, dans lequel ladite machine électrique (101) est un moteur à courant continu sans balais comportant lesdits aimants permanents (108) soit montés sur une surface dudit rotor (104) faisant face audit stator (102), soit intégrés à l'intérieur dudit rotor (104).

5. Système de commande (200) selon la revendication 1, dans lequel ladite machine électrique (101) est un moteur à courant continu sans balais comportant ledit rotor (104) disposé à l'intérieur dudit stator (102).

6. Système de commande (200) selon la revendication 1, dans lequel ladite machine électrique (101) est un moteur à courant continu sans balais dont ledit rotor (104) est disposé à l'extérieur dudit stator (102).

7. Système de commande (200) selon la revendication 1, dans lequel ledit enroulement (116) est formé selon au moins une configuration en étoile et une configuration en triangle.

8. Système de commande (200) selon la revendication 1, dans lequel le circuit élévateur de tension dans un état déclenché est indiqué au moyen d'un moyen visuel ou d'un moyen audio intégré à un tableau de bord dudit véhicule (100).

9. Système de commande (200) selon la revendication 1, dans lequel ledit contrôleur de machine (202) comprend un ou plusieurs commutateurs électroniques de puissance pour commander les tensions de phase de ladite machine électrique (101).

10. Système de commande (200) selon la revendication 1, dans lequel ledit rotor (104) est capable de tourner en interagissant avec un champ magnétique produit par ledit stator (102) lors de la réception d'énergie électrique provenant dudit au moins un dispositif de stockage d'énergie (212), ledit rotor (104) étant séparé dudit stator (102) par un entrefer (110), et dans lequel ledit champ magnétique est soit parallèle, soit perpendiculaire à un axe de rotation dudit rotor (104).

11. Système de commande (200) selon la revendication 1, dans lequel ladite valeur seuil prédéfinie du couple opérationnel à la fois pendant le démarrage dudit moteur à combustion interne (135) dudit véhicule (100) et pendant la fourniture d'une assistance motrice audit moteur à combustion interne (135) pendant le fonctionnement du véhicule (100) est de 50 N-m.

12. Système de commande (200) selon la revendication 1, dans lequel ledit ou lesdits capteurs (208) comprennent au moins un capteur de position du papillon des gaz, un capteur de vitesse ou un capteur d'émissions comprenant un capteur de NOx, et dans lequel l'entrée provenant dudit au moins un capteur de position du papillon des gaz correspond audit couple de fonctionnement dudit moteur à combustion interne (135) et l'entrée provenant dudit capteur d'émissions correspond au besoin d'une assistance au couple dudit moteur à combustion interne (135).

13. Procédé d'assistance d'un moteur à combustion interne (135) d'un véhicule à deux roues (100) pendant et après le démarrage et pendant son fonctionnement à grande vitesse, ledit procédé permettant de réduire les émissions lors du fonctionnement à grande vitesse et à des positions d'accélération élevées, ledit procédé comprenant les étapes suivantes :
recevoir au moins une valeur de sortie d'un couple de fonctionnement dudit moteur à combustion interne (135) et une valeur de sortie d'une vitesse de fonctionnement dudit moteur à combustion interne (135) provenant dudit ou desdits capteurs (208) par un contrôleur de machine (202) ;
comparer ladite valeur de sortie dudit couple de fonctionnement et ladite valeur de sortie de ladite vitesse de fonctionnement à une valeur seuil prédéterminée correspondante dudit couple de fonctionnement et à une valeur seuil prédéterminée de ladite vitesse de fonctionnement par ledit contrôleur de machine (202) ; et
déclencher un circuit d'augmentation de tension (206) dudit contrôleur de machine (202) lorsqu'au moins l'une parmi ladite valeur de sortie dudit couple opérationnel et ladite valeur de sortie de ladite vitesse opérationnelle est supérieure à ladite valeur seuil prédéterminée correspondante dudit couple opérationnel et à ladite valeur seuil prédéterminée de ladite vitesse opérationnelle afin d'augmenter la tension fournie à ladite machine électrique (101) par ledit circuit d'augmentation de tension (206), la fourniture de ladite tension à ladite machine électrique (101) par ledit circuit d'augmentation de tension (206) garantit qu'une exigence de couple de fonctionnement dudit moteur à combustion interne (135) est inférieure à ladite valeur seuil prédéterminée dudit couple de fonctionnement,
atteignant un couple de pointe, au courant de fonctionnement, limité à environ une valeur seuil prédéfinie de 50 N-m pendant le démarrage dudit moteur à combustion interne (135) dudit véhicule (100) par ledit système de commande (200),
l'obtention d'un couple maximal, au courant de fonctionnement, étant limitée à environ une valeur seuil prédéfinie de 50 N-M pendant la fourniture d'une assistance de puissance audit moteur à combustion interne (135) pendant le fonctionnement dudit véhicule (100) par ledit système de commande (200),
fournir un commutateur d'entrée utilisateur (210), ledit commutateur d'entrée utilisateur (210) étant capable de fournir des signaux d'entrée à un système de commande (200), dans lequel ledit système de commande (200) comprend au moins un microcontrôleur (204), et
configurer ledit au moins un microcontrôleur (204) pour déclencher ledit circuit élévateur de tension (206) lors de la réception desdits signaux d'entrée provenant dudit commutateur d'entrée utilisateur (210) en neutralisant les signaux reçus provenant dudit ou desdits capteurs (208).
